# EUROPEAN PATENT SPECIFICATION

(11) **EP 3 006 758 B1**
(45) Date of publication and mention of the grant of the patent: **11.11.2020**
(21) Application number: 15184465.1
(22) Date of filing: 09.09.2015
(51) Int. Cl.: F16C 35/067, F16C 39/00, F16C 17/22, F16C 19/18, F16C 19/52, F16C 35/077, F16C 19/54

(54) **ASSEMBLY FOR AN ENCODER AND ENCODER EMPLOYING SAME**
ANORDNUNG FÜR EINEN CODIERER UND CODIERER DAMIT
ENSEMBLE POUR UN CODEUR ET UN TEL CODEUR L'UTILISANT

(30) Priority: 06.10.2014 JP 2014205542
(43) Date of publication of application: 13.04.2016
(73) Proprietor: Dr. Johannes Heidenhain GmbH, 83301 Traunreut (DE)
(72) Inventor: TAKATERA, Jun, Tokyo, 102-0083 (JP)

(56) References cited:
- WO-A1-03/027523
- JP-A- 2001 298 894
- JP-A- 2002 125 345
- JP-A- 2010 054 028
- JP-A- 2012 189 180

## Description

The present invention relates to an assembly for an encoder in particular to a bearing structure for supporting a rotary shaft of an encoder for measuring the rotational position and rotational speed etc. of a rotary drive device such as a motor or a mechanism which is driven in rotation thereby, and also relates to an encoder having said bearing structure.

An encoder converts the state of a rotary disc or a linear scale, for example, into an electrical signal. In the case of an optical rotary encoder, for example, light emitted by a light-emitting element passes through a rotary disc, and a signal received by a light-receiving element is converted to a digital pulse output signal having a rectangular waveform by a signal processing unit.

A rotary encoder comprises a rotary shaft for measuring the angle of displacement, amount of displacement, and amount of rotation etc. of a rotating body, and a disc-shaped coding plate which is fixed to the rotary shaft, but a bearing structure for supporting this kind of rotary mechanism also has to be provided.

A rolling bearing such as a ball bearing or roller bearing is generally used in order to ensure smooth rotation at the high level of accuracy which is required for an encoder or the like. When a normal rolling bearing is fitted to a support material, said rolling bearing is fitted by imparting interference to a mating surface, in order to prevent vibration and a sliding phenomenon referred to as grooving, which has a very adverse effect on lifespan etc. An internal gap in the radial direction and the axial direction is present at the bearing, and it is necessary to limit this gap in order to improve durability and bearing load. It is normally necessary to apply pre-compression in the axial direction in order to improve the durability and bearing load, and the interference in the radial direction is adjusted as a result.

In general, the bearing of a rotary encoder simply supports a structure such as the coding plate inside, so there is no need for a large amount of bearing load. It is also assumed that the abovementioned interference will not be adjusted by an excessively large amount. However, devices in recent years have become more compact and more lightweight, while the number of components has also been minimized, and devices are designed in such a way that structural members which can be shared are shared as far as possible. For this reason, the bearing of an encoder may require performance such that it can also function as the bearing of another mechanism inside the device.

However, a conventional encoder bearing has a small allowable load, and when such a bearing also serves as the bearing of another mechanism, there is a risk that the allowable load will be exceeded, producing oscillation, and that it will no longer be possible to ensure high-precision rotation. When a certain degree of bearing load is anticipated, pre-compression in the axial direction is set at a high level in order to increase the interference in advance, and the bearing load is improved.

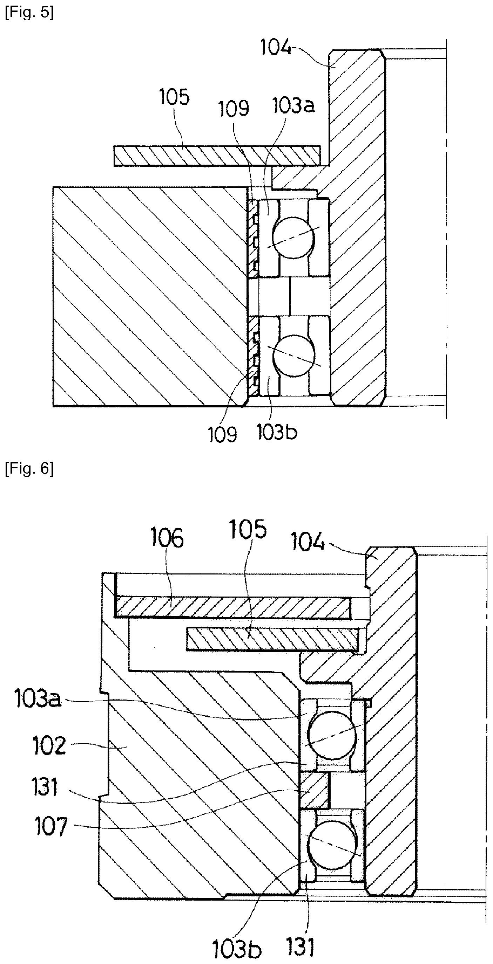

Fig. 6 is a half-view in cross section showing the basic configuration of a conventional encoder. The right-hand portion has been omitted from the figure, but in actual fact the same structure is apparent symmetrically to the left and right about the shaft at the right-hand end in the figure. The encoder shown in the figure comprises: a main body 102; a pair of bearings 103a, 103b; a spacer 107 disposed between the bearings 103a, 103b; and a rotary shaft 104 which is supported by the bearings 103a, 103b. Furthermore, a coding plate 105 for detecting the rotational position etc. is fitted to a flange portion of the rotary shaft 104, and a circuit board 106 on which are mounted circuit elements and sensors for detecting a coding pattern inside the coding plate is disposed above the coding plate 105 with a slight gap therebetween.

With this conventional encoder, interference is adjusted in the axial direction with respect to the bearings 103a, 103b, as described above, and a certain amount of pressure referred to as pre-compression is applied. The interference in this case is generally set when the bearings are assembled with the rotary shaft, and the pre-compression is applied in the following manner, for example. First of all, the first bearing is inserted and fitted from the opposite side of the rotary shaft to the flange (the bearing fitting location), the first bearing and the rotary shaft are bonded, the spacer is then fitted on the opposite side of the first bearing to the flange, the second bearing is then inserted and fitted to the rotary shaft in the same way as the first bearing, a set pre-compression (weighting) is applied to the first bearing and the second bearing from the bearing insertion side, the second bearing and the rotary shaft are bonded, and after the adhesive has cured, the pre-compression is released and the assembly is complete. In this process, the first bearing and the second bearing are fixed in a state in which pre-compression has been applied, so the state in which pre-compression has been applied is maintained between the two.

When the bearing load is to be increased, this is normally achieved by increasing the interference in the axial direction. There are no problems in the inspection during assembly in the case of a bearing in which the interference has been increased in this way, but there may be torque fluctuations in the rotary shaft for the user etc. once the final process has been completed and the bearing has been shipped. This torque fluctuation constitutes a fluctuation in the load produced on the rotary shaft by the encoder, and there is a risk of this leading to uneven rotation of the motor which is coupled thereto and adversely affecting the detection accuracy of the high-precision encoder. Furthermore, there is also a possibility that an irregular load will be exerted on the bearing itself, which produces vibration over time, and also that wear will be produced, which also adversely affects lifespan.

JP 2002 125345 A, JP 2012 189180 A, JP 2001 298894 A, WO 03027523 A1 and JP 2010 054028 A disclose assemblies comprising two bearings arranged with respect to the axial direction in staggered manner, e. g. in connection with motors.

JP 2010-032290 A (Patent Document 1) describes an encoder which is disposed on the outer circumference of a bearing and comprises, on an outer circumferential surface 30 thereof, a bearing holding tube 21 which is formed with an annular groove in the centre. However, the groove structure on the outer circumferential surface 30 is intended for fixing by abutment of a screw 42 passing through a threaded hole 41, and there is no mention at all of pre-compression or stress applied to the bearing.

JP 2011-226642 A (Patent Document 2) describes a structural unit for an angle measurement device, the structural unit comprising a shaft .1 having a reference scale 2 for measuring rotational operation about an axis Z, with the aim of obtaining a structural unit for an angle measurement device which can reliably and permanently achieve high measurement accuracy. Furthermore, a helical groove is formed on the outer circumference of the shaft 1.

However, paragraph 0027 of that document reads as follows: "Lubricant enters a hollow space 4.4 in the radial direction along the side face of an inner race 3.1 within a gap 4.3, the hollow space extending along the outer circumference of the shaft 1 and also including a helical space 4.41 for increasing the receiving volume. As a result, the hollow space 4.4 is bounded in the radial direction by the inner race 3.1 of the rolling bearing 3 and the shaft 1". In other words, the helical space 4.41 is formed in order to increase the volume for retaining lubricant, and is not intended to reduce pre-compression.

US Patent 4089570 (Patent Document 3) describes a journal bearing having axially split bearings, and relates to a journal bearing which can be easily assembled / disassembled with the aim of absorbing both radial and axial stresses between a housing wall and a shaft which is rotatably supported by the housing wall.

That journal bearing comprises two symmetrical halves, each designed to absorb both radial and axial stresses. That journal bearing comprises two axially abutting inner rings fixed to a shaft, and two axially abutting outer rings fixed to a housing wall concentric with the shaft. The inner rings form seats for balls or rollers engaging contact zones on the inner circumferential surfaces of the outer rings. The outer rings are offset from these seats in an axially inward or an axially outward direction. According to a first example, in the housing wall, an annular recess is aligned with a circumferential groove of equal axial length to an abutment of an outer circumferential ring. According to a second example, an annular recess is formed in abutment with the inner rings and is aligned with a circumferential groove of equal axial length on the shaft. In either example, a destructible retaining ring 7 made of a plastic material is interposed in two aligned annular grooves 10 of rectangular cross section. The axial length of the retaining ring 7 is equal to or less than the axial length of the annular groove.

However, the journal bearing described in that document is lacking versatility because it has a special shape which differs from that of a conventional bearing. Furthermore, the annular groove 10 is formed between the outer bearing and the housing, but the actual outer bearing has a shape forming part of the annular groove 10. Moreover, the annular groove 10 is formed at an intermediate part of the pair of outer rings disposed in axial abutment. In addition, the annular groove 10 lies on a straight line of extension joining the contact points of inner rings 2a', 2b' and outer rings 2a", 2b" of rotary bodies 21a, 21b, and not on a straight line extending radially from the contact points of said rotary bodies with the outer rings 2a", 2b".

The problem to be solved lies in providing an encoder bearing having a structure which can restrict unintended increases in radial pre-compression accompanying the phenomenon of an enlarged adhesive layer caused by differences in the thermal expansion coefficient of the members used, and can also restrict occurrences of the accompanying torque ripple; and also in providing an encoder employing same.

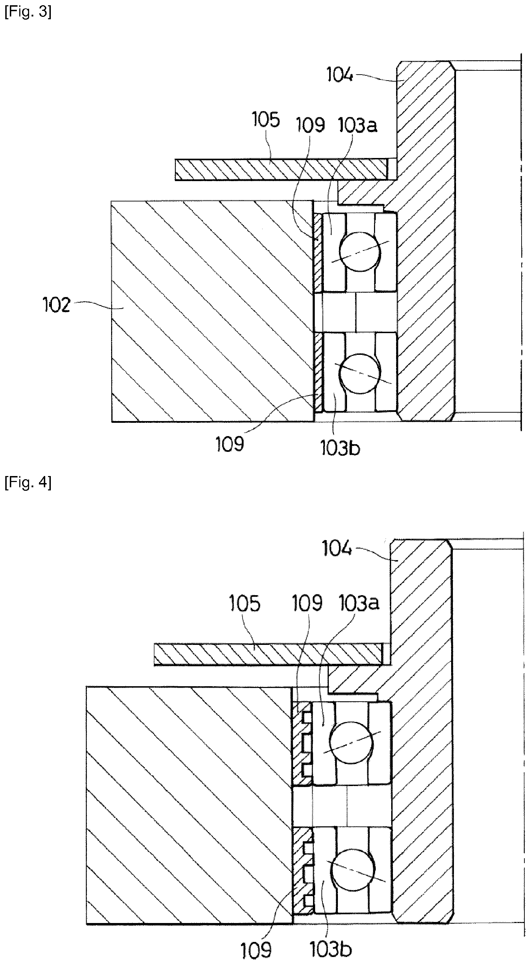

The present inventors analysed and investigated bearing structures in order to research the causes of the abovementioned problems. As a result, it was determined that the following mechanism acts on torque fluctuation. When an encoder having a bearing with the abovementioned type of structure is produced, adhesive is applied between bearings 103a, 103b and an encoder main body 102 in order to form an adhesive layer, and as a result the bearings 103a, 103b are firmly fixed, as shown in fig. 3. Here, fig. 3-5 are partial enlargements showing the state of the adhesive applied to the bearings 103a, 103b; structural components which are not required for an understanding of the structure and the details of the structure are not depicted.

The adhesive requires a heating step for the curing process, so after the adhesive has been applied, the structure is heated at a fixed temperature. However, with many encoders, some or all of the main body 102, bearings 103a, 103b and rotary shaft 104 are formed from different materials. In general, aluminium is used for the main body 102, iron is used for the rotary shaft 104 and various materials including stainless steel, iron, chromium steel, nickel-chromium-molybdenum steel, and stainless steel are used for the bearings. These materials have different thermal expansion coefficients, so a longer space is formed between the main body 102 and the rotary shaft 104 within the space accommodating the bearings 103a, 103b when the abovementioned heat treatment is performed.

When this happens, the radial gap in which an adhesive layer 109 is formed increases, as shown in fig. 4, the adhesive layer 109 extends in the radial direction in a corresponding shape, and the adhesive cures in a state in which the thickness of the adhesive layer is increased. When the structure is subsequently cooled, the cooling acts in a direction such that the radial gap narrows to the original state. However, the thickness of the adhesive layer 109 expands to the state shown in fig. 4 and cures, so even if there is a certain amount of compression as shown in fig. 5, the thickness of the adhesive layer is greater than the thickness at the time when the adhesive was applied, as shown in fig. 3. The increased thickness of the adhesive layer increases the radial pressure with respect to the bearing and applies extra interference. This extra interference imparts excessive pre-compression which adversely affects rotation operations as a result. In extreme cases, a ripple-like torque fluctuation occurring at a specific rotational position which is known as torque ripple occurs, and this causes an obstruction to precise and smooth rotation operations.

The abovementioned aim is achieved by means of the following configuration in accordance with the present invention.

An encoder comprising: a main body, two bearings arranged with respect to the axial direction in staggered manner, each of the bearings comprising an outer ring and a rolling body, the outer ring and the rolling body are in contact at a contact point and a rotary shaft. The assembly also comprises a pair of bearings and a rotary shaft to which a coding plate is fitted. The main body comprises a stress-relief groove which is arranged in the circumferential direction around the bearings forming a predetermined gap between the main body and the bearings. Furthermore a line extending radially from the contact point intersects the outer bearing surface at a point where the gap is located.

The thermal expansion coefficients of at least the main body and the rotary shaft of the assembly for an encoder may be different.

The encoder comprises a heat-curabfe adhesive layer which is formed between the main body and the bearings.

The axial width of the stress-relief groove may be at least 1/3 of the axial width of the bearings assembly for an encoder.

The invention also comprises an encoder with the abovementioned assembly.

The present invention makes it possible to provide an encoder bearing having a structure which can restrict unintended increases in radial pre-compression and can restrict the occurrence of torque ripple, and also to provide an encoder employing same.

Other aspects and advantages of the invention will become apparent upon reading the following detailed description of exemplary embodiments, with the aid of the enclosed figures.

These show:
- Figure 1: is a half-view in cross section showing the basic configuration of the bearing structure according to the present invention (Exemplary Embodiment 1);
- Figure 2: is a half-view in cross section showing the basic configuration of the main parts of the bearing structure according to the present invention (Exemplary Embodiment 1);
- Figure 3: is a partial enlargement showing the state of the adhesive layer formed between the bearings and the main body;
- Figure 4: is a partial enlargement showing the state of the adhesive layer formed between the bearings and the main body;
- Figure 5: is a partial enlargement showing the state of the adhesive layer formed between the bearings and the main body; and
- Figure 6: is a half-view in cross section showing the basic configuration of the main parts of a conventional encoder.

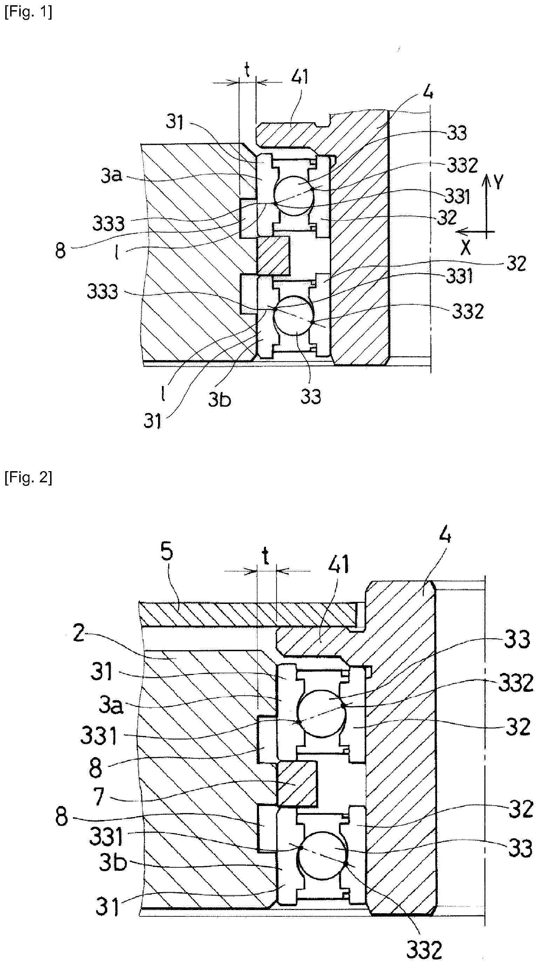

As shown in fig. 1 and fig. 2, for example, the assembly for an encoder according to the present invention comprises: a main body 2, a pair of bearings 3a, 3b arranged with respect to the axial direction (the Y-direction in the figure) in staggered manner, and a rotary shaft 4. The main body 2 comprises a stress-relief groove 8 forming a predetermined gap t between the main body 2 and the bearings 3a, 3b. Furthermore a line I extending radially from the contact point 331 intersects the outer bearing surface at a point 333 at a section where the gap t is located.

As described above, torque ripple is caused by unintended excessive pre-compression in the radial direction which is applied to the bearings. It has been established that this occurs as a result of the thickness of the adhesive layer becoming larger when the gap between the main body 2 and the bearings increases, and then the gap between the main body 2 and the bearings once again becoming smaller. It is therefore possible to relieve the excessive pre-compression by forming a structure that can efficiently relieve this pre-compression on any of the main body 2, adhesive layer or bearings.

The radial stress on the periphery of the bearing is transmitted in the following manner: main body 2 - adhesive layer - outer ring 31 - rolling body 33 - inner ring 32 - bearing. Here, looking in further detail at the outer ring 31 - rolling body - inner ring 32 path, stress is transmitted between the rolling body and outer ring 31 /inner ring 32 through the contact points of the rolling body and the inner ring 32 and outer ring 31. Interference is normally also set in the axial direction, so the line joining the contact points of the outer ring 31 and inner ring 32 is inclined with respect to a straight line in the radial direction passing through the centre of the rolling body. Interference in the axial direction is set in the pair of bearings by means of an intermediate spacer, so the line joining the inclined contact points is vertically symmetrical.

Fig. 1 is a partial half-view in cross section showing this kind of assembly for an encoder. The right-hand portion has been omitted from the figure, but in actual fact the same structure is apparent symmetrically to the left and right about the right-hand end in the figure. The bearing structure shown in the figure comprises: a main body 2; a pair of bearings 3a, 3b; a spacer 7 disposed between the bearings 3a, 3b; and a rotary shaft 4 which is supported by the bearings 3a, 3b. Moreover, a coding plate 5 (not depicted) for detecting the rotational position etc. is fitted to a flange 41 of the rotary shaft 4.

The pair of bearings 3a, 3b comprise spherical rolling bodies 33 between an outer ring 31 and an inner ring 32 thereof. The outer rings 31 of the bearings 3a, 3b are subjected to upward and downward stresses, respectively, by means of the spacer 7, the outer ring 31 of the bearing 3a being skewed in such a way as to be upwardly offset and the outer ring 31 of the bearing 3b being skewed in such a way as to be downwardly offset. The rolling bodies 33 of the bearings 3a, 3b therefore come into contact with the spacer 7 side of each outer ring 31. Conversely, the inner ring 32 and the rolling body 33 are in contact at a location on the side which is remote from the spacer 7. In other words, the contact points of the rolling bodies are such that a contact point 331 on the outer ring side is positioned close to the middle of the pair of bearings, while a contact point 332 on the inner ring side is positioned at a distance from the middle of the pair of bearings, and the line joining these contact points is inclined.

According to the present invention, the stress-relief groove 8 which is a strip-like structure extending in the circumferential direction around the bearings is formed at the point of intersection of the main body 2 outer bearing surface and a straight line extending radially (in the X-direction in the figure) from the contact point 331 on the outer ring 31 side, in such a way that the main body 2 member which is in contact with the bearing and transmits stress directly is not present at that location. In other words, a gap t which is the space inside the groove is formed between the main body 2 and the bearings 3a, 3b when the strip-like stress-relief groove 8 is formed. In this way, it is possible to prevent stress from being transmitted directly to the bearing side from the outer ring 31 by way of the contact point 331 of the rolling body 33, by providing the strip-like gap between the main body 2 and the outer bearing surface, and it is possible to relieve excessive stress which is applied to the rolling body.

The stress-relief groove is formed in the circumferential direction of the main body 2 along the outer bearing surface. The strip-like groove structure extending in the circumferential direction must be present at least at a point 333 where a straight line I extending in the radial direction from the contact point 331 of the outer ring 31 and the rolling body 33 intersects the outer bearing surface of the main body 2. By forming this groove structure at the point 333, it is possible to prevent stress from being directly transmitted between the main body 2 and the rolling body through the contact point 331, and stress is relieved.

The stress-relief groove can be freely set to a certain extent provided that the abovementioned relationship is satisfied. However, one end thereof should lie in the middle in the axial direction (the Y-direction in the figure) of the pair of bearings, in other words the part of the groove in the same location as the end on the spacer side should form the outermost part, while the other end should lie between 1/2 - 2/3 of the bearing from the abovementioned end. In other words, the region of contact between the main body 2 and the bearing should be such that a portion of at least 1/3 on the opposite side remote from the intermediate position constituting the spacer side is in contact with the main body 2 as a result of the abovementioned gap portion being removed.

The depth of the stress-relief groove, or the distance t of the gap between the main body 2 and the bearing outer circumferential surface, is around 0.08-2 mm, and more preferably around 0.1-1.3 mm. If the groove is shallower than the abovementioned range, the action of the present invention is not readily exhibited. If the groove is deeper than the abovementioned range, air which is present in the gap may adversely affect the adhesive when an anaerobic adhesive is used.

The adhesive layer is formed between the main body 2 and the bearing 3a, 3b, although this is not shown in fig. 1. Excessive pre-compression is generated when the thickness of the adhesive layer is increased in the manner described above, but the adhesive layer is required in order to ensure the reliability of the bearing structure and to maintain performance over a long period of time, so the adhesive layer must be formed to provide fixing. The thickness of the adhesive layer depends on the type of adhesive used, but it is normally around 10-40 µm, and preferably around 20-30 µm.

Normal synthetic adhesives may be used as the adhesive for forming the adhesive layer, and examples which may be mentioned include: acrylic resin adhesives, acrylic resin anaerobic adhesives, acrylic resin emulsion adhesives, urethane resin adhesives, urethane resin solvent adhesives, urethane resin emulsion adhesives, epoxy resin adhesives, vinyl chloride resin solvent adhesives, cyanoacrylate adhesives, silicone adhesives, aqueous polymer-isocyanate adhesives, phenolic resin adhesives, polyimide adhesives, and polybenzimidazole adhesives.

Among the abovementioned resins, epoxy resin adhesives, phenolic resin adhesives, polyimide adhesives (PI adhesives), and polybenzimidazole adhesives (PBI adhesives) or the like are preferred, and anaerobic acrylic resin adhesives are especially preferred. Furthermore, heat treatment may be carried out if it is required for curing the adhesive, the heating temperature normally being 80°C or more.

Any or all of the components forming the bearing structure, that is, at least the main body 2, bearings and rotary shaft 4, are formed from different materials. For example, aluminium is used for the main body 2, iron is used for the rotary shaft 4, and stainless steel, iron, chromium steel, nickel-chromium-molybdenum steel, stainless steel or the like is used for the bearings. These materials have different thermal expansion coefficients, and when the heat treatment is performed, the length of the space between the main body 2 and the rotary shaft 4 increases in the radial direction at the portion where the bearings are provided within the space for accommodating the bearings inside the main body 2. The thermal expansion coefficients (coefficients of thermal expansion) of the main materials are as follows, for example: aluminium: 23×10⁻⁶ K (°C), iron/steel: 12.1×10⁻⁶ K (°C), chromium: 6.8×10⁻⁶ K (°C), and stainless steel [SUS304] 17.3×10⁻⁶ K (°C).

"Torque ripple" in accordance with the present invention means a torque fluctuation which varies sharply at any rotational position of the rotary shaft 4. When the bearing is rotating at a constant speed, torque fluctuations with respect to the time axis or rotational position can be recorded as a torque fluctuation curve. The curve at the point of torque fluctuation in the torque fluctuation curve is similar to an electrical pulse and an overshoot and an undershoot are formed. The torque fluctuation range is around ±0.6-1.5 [mNm], but a smaller torque fluctuation range is preferred. Torque ripple is believed to be produced by each rolling body in a bearing, and for each revolution of a rolling body, the same number of torque ripples as there are rolling bodies is produced. In view of this, it is believed that torque ripples are produced when the rolling bodies pass through a location in which the outer ring 31 of the bearing is deformed by stress.

The encoder according to the present invention can be used with any type of system, such as an optical system, magnetic system or induction system, provided that it has the abovementioned bearing structure. The important point is that a certain level or greater of pre-compression is applied to the bearing. The pre-compression which is especially effective in the present invention is several times greater than the pre-compression which is normally applied in the axial direction.

### Exemplary Embodiment 1

The present invention will be described in more specific terms next by means of an exemplary embodiment. Fig. 2 is a half-view in cross section showing an example of the configuration of an encoder system constituting Exemplary Embodiment 1 of the present invention. The right-hand portion has been omitted from the figure, but in actual fact the same structure is apparent symmetrically to the left and right with respect to the right-hand end in the figure. The bearing structure shown in the figure comprises: a main body 2; a pair of bearings 3a, 3b which are arranged with respect to the axial direction in staggered manner; a spacer 7 disposed between the bearings 3a, 3b; and a rotary shaft 4 which is supported by the bearings 3a, 3b. A coding plate 5 for detecting the rotational position etc. is fitted to a flange 41 of the rotary shaft 4. Furthermore, a circuit board on which are mounted circuit elements for performing electrical processing and sensors for reading a coding pattern formed on the coding plate 5 is disposed above the coding plate 5.

The two bearings 3a, 3b comprise spherical rolling bodies 33 between an outer ring 31 and an inner ring 32 thereof. The outer rings 31 of the bearings 3a, 3b are subjected to upward and downward stresses, respectively, by means of the spacer 7, the outer ring 31 of the bearing 3a being skewed in such a way as to be upwardly offset and the outer ring 31 of the bearing 3b being skewed in such a way as to be downwardly offset, and apply interference in the axial direction. As a result, the rolling bodies 33 of the bearings 3a, 3b both come into contact with the middle direction-side of the outer rings 31, in other words the spacer side. Conversely, the inner ring 32 and the rolling body 33 are in contact at a location on the side which is remote from the spacer 7 in the opposite direction to the middle direction. In other words, the contact points of the rolling bodies are such that a contact point 331 on the outer ring side is positioned close to the middle of the pair of bearings, while a contact point 332 on the inner ring side is positioned at a distance from the middle of the pair of bearings, and the line joining these contact points is inclined.

A strip-like stress-relief groove 8 is formed at the point of intersection of the main body 2 outer bearing surface and a straight line extending radially from the contact point 331 on the outer ring side. A gap t is then formed between the main body 2 and the bearings 3a, 3b by means of the stress-relief groove 8. The stress-relief groove 8 constituting the structure is formed in the shape of a strip in the circumferential direction of the main body 2 along the contact surface with the bearings. The strip-like stress-relief groove 8 extending in the circumferential direction lies at the position of intersection of a straight line extending in the radial direction from the point of contact of at least the outer ring and the rolling body, with the main body 2 outer bearing surface. In other words, the gap t formed by the groove 8 is present in that region.

One end of the structure lies at the middle part in the axial direction of the pair of bearings, in other words the part of the groove in the same location as the end on the spacer 7 side forms the outermost part, while the other end reaches up to 1/2 of the width of the bearing from the abovementioned end. The depth t of the groove is set to the optimum gap in the range of 0.1-1.3 mm. By forming the groove in this way, it is possible to reduce torque ripple or to render torque ripple at a level which cannot be detected.

The operation of the encoder will be briefly described. When a rotary shaft such as a drive device rotates, an encoder shaft 4 which is connected thereto follows this rotation and operates in the same way. At this point, the coding plate 5 which is fitted to the encoder shaft 4 also operates in the same way. A coding pattern such as to generate a predetermined signal which varies in accordance with rotation is generally formed on the coding plate 5 which is formed by a transparent member such as glass. Light emitted by a light-emitting element disposed in the vicinity of the coding plate passes through the coding pattern on the coding plate 5, and when this light falls incident on the circuit board disposed in the shape of the coding plate, a signal corresponding to the coding pattern is generated. An output signal is then varied in accordance with the operation of coding plate.

The signal generated by a light-receiving element is an analogue signal, but the necessary signal processing such as waveform shaping is performed by means of the elements and circuits mounted on the circuit board, and said analogue signal is converted to a digital pulse signal having a rectangular waveform. Here, a variety of light-receiving elements are provided, and by adjusting the position thereof it is possible to produce signals with a phase shift of 90°, for example. These signals are generally output as two signals with a phase difference, namely A phase and B phase, and an incremental signal is produced. The two signals with a phase difference, namely A phase and B phase, are phase-inverted by the direction of rotation, so it is possible to measure the amount of rotational displacement and the direction of rotation, the signals can be electrically counted, and the rotation speed can be measured by outputting a separate rotation signal each time.

Furthermore, a coding plate formed with an absolute pattern which can detect absolute position may be provided, and a single detector or a plurality of detectors which can detect the code of the coding plate may be provided in order to detect an absolute position value signal within one rotation. Furthermore, in this case, the coding plate and the detector(s) for detecting one rotation may be separately provided, and when the structure is adapted in such a way that one rotation is detected thereby, it is a simple matter to detect the absolute value and rotation speed within one rotation. Furthermore, it is also possible to detect erroneous detection and erroneous operation by using data from detection of one rotation.

The assembly for an encoder according to the present invention can be applied to various types of encoder regardless of the mode of measurement thereof, provided that such encoder has a structure comprising a pair of bearings 3a, 3b between a rotary shaft 4 and a main body 2. Furthermore, said assembly for an encoder is effective for a bearing structure in which the bearings 3a, 3b are fixed to the main body 2 using an anaerobic, heat-curable adhesive and the materials of the bearings 3a, 3b in the main body 2 have different thermal expansion coefficients, but it can also be applied to an encoder in which a high level of stress is applied in the radial direction of the bearings 3a, 3b.

### Key to Symbols

- 2: Main body
- 3a, 3b: Bearing
- 4: Rotary shaft
- 5: Coding plate
- 7: Spacer
- 8: Stress-relief groove
- 31: Outer ring
- 32: Inner ring
- 33: Rolling body
- 41: Flange
- 331, 332: Contact point
- 102: Main body
- 103a, 103b: Bearing
- 104: Rotary shaft
- 105: Coding plate
- 106: Circuit board
- 107: Spacer

## Claims

1. Encoder having an assembly comprising:
- a main body (2),
- a pair of bearings (3a, 3b) arranged with respect to the axial direction in staggered manner, each of the bearings (3a, 3b) comprising an outer ring (31) and a rolling body (33), the outer ring (31) and the rolling body (33) are in contact at a contact point (331) and
- a rotary shaft (4) to which a coding plate (5) is fitted,
wherein the main body (2) comprises a stress-relief groove (8) which is arranged in the circumferential direction around the bearings (3a, 3b) forming a predetermined gap (t) between the main body (2) and the bearings (3a, 3b),
wherein furthermore a line (I) extending radially from the contact point (331) intersects the outer bearing surface at a point (333) where the gap (t) is located.
wherein a heat-curable adhesive layer is formed between the main body (2) and the bearings (3a, 3b).

2. Encoder according to Claim 1, wherein the thermal expansion coefficients of at least the main body (2) and the rotary shaft (4) are different.

3. Encoder according to any of Claims 1 or 2, wherein the axial width of the stress-relief groove (8) is at least 1/3 of the axial width of the bearings (3a, 3b).

## Patentansprüche

1. Codierer mit einer Anordnung, umfassend:
- einen Hauptkörper (2)
- ein Paar Lager (3a, 3b), die bezüglich der Axialrichtung versetzt angeordnet sind, wobei jedes der Lager (3a, 3b) einen Außenring (31) und einen Wälzkörper (33) umfasst, wobei der Außenring (31) und der Wälzkörper (33) an einem Kontaktpunkt (331) in Kontakt sind, und
- eine Drehwelle (4), an der eine Codierplatte (5) angebracht ist,
wobei der Hauptkörper (2) eine Spannungsentlastungsnut (8) umfasst, die in der Umfangsrichtung um die Lager (3a, 3b) angeordnet ist und dabei einen Spalt (t) zwischen dem Hauptkörper (2) und den Lagern (3a, 3b) bildet,
wobei ferner eine sich radial von dem Kontaktpunkt (331) erstreckende Linie (1) die Außenlagerfläche an einem Punkt (333), an dem sich der Spalt (t) befindet, schneidet,
wobei eine wärmehärtbare Klebstoffschicht zwischen dem Hauptkörper (2) und den Lagern (3a, 3b) gebildet ist.

2. Codierer nach Anspruch 1, wobei die Wärmeausdehnungskoeffizienten mindestens des Hauptkörpers (2) und der Drehwelle (4) verschieden sind.

3. Codierer nach Anspruch 1 oder 2, wobei die axiale Breite der Spannungsentlastungsnut (8) mindestens 1/3 der axialen Breite der Lager (3a, 3b) beträgt.

## Revendications

1. Codeur ayant un ensemble comprenant :
- un corps principal (2),
- une paire de paliers (3a, 3b) disposés par rapport à la direction axiale de manière étagée, chacun des paliers (3a, 3b) comprenant une bague extérieure (31) et un corps de roulement (33), la bague extérieure (31) et le corps de roulement (33) étant en contact au niveau d'un point de contact (331) et
- un arbre rotatif (4) sur lequel est ajustée une plaque de codage (5),
le corps principal (2) comprenant une gorge de libération des contraintes (8) qui est disposée dans la direction circonférentielle autour des paliers (3a, 3b) en formant un espace prédéterminé (t) entre le corps principal (2) et les paliers (3a, 3b),
une ligne (1) s'étendant radialement depuis le point de contact (331) intersectant en outre la surface de palier extérieure en un point (333) où se situe l'espace (t),
une couche d'adhésif thermodurcissable étant formée entre le corps principal (2) et les paliers (3a, 3b).

2. Codeur selon la revendication 1, dans lequel les coefficients de dilatation thermique d'au moins le corps principal (2) et l'arbre rotatif (4) sont différents.

3. Codeur selon l'une quelconque des revendications 1 et 2, dans lequel la largeur axiale de la gorge de libération des contraintes (8) mesure au moins un tiers de la largeur axiale des paliers (3a, 3b).
